# EUROPEAN PATENT APPLICATION

(11) **EP 4 685 777 A1**
(43) Date of publication of application: **28.01.2026**
(21) Application number: 24918904.4
(22) Date of filing: 05.04.2024
(51) Int. Cl.: G09F 9/30, G09F 21/04, F16H 1/16, F16H 25/20, F16H 19/04, B60K 35/00

(54) **DISPLAY DEVICE FOR VEHICLE**

(30) Priority: 19.01.2024 KR 20240008724
(71) Applicant: LG Electronics Inc., Yeongdeungpo-gu Seoul 07336 (KR)
(72) Inventor: CHOI, Biseok, Seoul 06772 (KR); TAK, Wooseong, Seoul 06772 (KR); KIM, Sangwon, Seoul 06772 (KR); JUNG, Woo, Seoul 06772 (KR); PARK, Chanhoon, Seoul 06772 (KR)
(74) Representative: Vossius & Partner Patentanwälte Rechtsanwälte mbB
(86) International application number: PCT/KR2024/004535
(87) International publication number: WO 2025/154870

(57) **Abstract**

A display device for a vehicle may comprise a fixed frame; a sliding frame slidably disposed on the fixed frame; a sliding drive source disposed on the fixed frame to slide the sliding frame; a swivel frame rotatably connected to the sliding frame by a swivel hinge; a display module disposed on the swivel frame; and a swivel drive source disposed on the sliding frame to swivel the swivel frame.

## Description

### [Technical Field]

The present disclosure relates to a display device for a vehicle.

### [Background Art]

The vehicle may be equipped with a display device.

An example of a display device for a vehicle installed in a vehicle may be mounted on a rotating display holder disclosed in Korean Patent Publication No. 10-2023-0147861 A (published on October 24, 2023), and the rotating display holder includes a mounting bracket that is installed on an instrument panel of a vehicle to mount a display device, and when an air bag installed inside the instrument panel is deployed, the rear part thereof is hit by the deployed air bag and rotates forward toward a vehicle interior seat, and prevents the display device from being released from the mounting state thereof; and a rotating support part that is connected to the mounting bracket to rotatably support the mounting bracket with respect to the instrument panel.

### [Disclosure]

### [Technical Problem]

The present embodiment can provide a display device for vehicle that allows a passenger to conveniently touch or operate a display module. [ 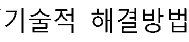 ]

### [Technical Solution]

A display device for a vehicle according to the present embodiment may comprise a fixed frame; a sliding frame slidably disposed on the fixed frame; a sliding drive source disposed on the fixed frame to slide the sliding frame; a swivel frame rotatably connected to the sliding frame by a swivel hinge; a display module disposed on the swivel frame; and a swivel drive source disposed on the sliding frame to swivel the swivel frame.

The display module may operate in one of the following modes: a telescopic mode in which the display module moves toward a passenger; a left swing mode in which the display module moves toward the passenger and swings in an inclined left direction; and a right swing mode in which the display module moves toward the passenger and swings in an inclined right direction.

The sliding frame may be disposed above the fixed frame to slide forward and rearward.

A size of the sliding frame may be smaller than a size of the fixed frame.

The display device for vehicle comprises a sliding main shaft and a sliding sub shaft supported by the fixed frame and connected to the sliding frame, the sliding main shaft and the sliding sub shaft may be spaced apart in a direction orthogonal to a sliding direction of the sliding frame.

The sliding frame may be formed with a first guide having a sliding main shaft guide formed in the first guide through which the sliding main shaft passes; a second guide having a sliding sub shaft guide formed in the second guide through which the sliding sub shaft passes;

The sliding sub shaft guide may include an opening extending to one end of the second guide.

The opening may be opened in a direction orthogonal to the sliding direction of the sliding frame.

The sliding drive source may comprise a lead screw; a nut mounted on the sliding frame and moving along the lead screw; and a sliding motor rotating the lead screw.

The sliding drive source further may comprise a sliding gear box, and the sliding gear box may comprise a driven gear connected to the lead screw; and a driving gear connected to the sliding motor and rotating the driven gear.

The sliding motor may be disposed above the sliding gear box.

The display device for vehicle may comprises a lead screw supporter disposed on the fixed frame to support the lead screw.

The swivel frame may comprise a rear body disposed on the display module; a swivel driven gear formed on the rear body; and a penetration portion through which the swivel hinge passes.

The sliding frame may include a support portion having a support hole formed in the support portion for rotatably supporting the swivel hinge.

The swivel driven gear may include a worm gear.

The swivel drive source may comprise a worm wheel meshed with the worm gear; and a swivel motor disposed on the sliding frame to rotate the worm wheel.

The display device for vehicle may further comprise a worm wheel supporter disposed on the sliding frame to support the worm wheel.

A distance between the swivel motor of the swivel drive source and the display module may be shorter than a distance between the sliding motor of the sliding drive source and the display module.

The swivel motor of the swivel drive source may be driven together with the sliding motor of the sliding drive source, the swivel motor may be stopped while the sliding motor is driven, and the swivel motor may be driven after the sliding motor is stopped.

### [Advantageous Effect]

According to the present embodiment, the display module can move forward and rearward as well as swing, allowing passengers to more conveniently touch and operate the display module.

### [Description of Drawings]

FIG. 1 is a plan view of a display device for vehicle according to the present embodiment;
FIG. 2 is a perspective view of a display device for vehicle according to the present embodiment;
FIG. 3 is a view of a display device for vehicle according to the present embodiment when the display module is separated;
FIG. 4 is a view illustrating a sliding frame and a lead screw according to the present embodiment;
FIG. 5 is a view illustrating various modes of the display module illustrated in FIG. 1.

### [Best Mode]

Hereinafter, specific embodiments of the present disclosure will be described in detail with reference to the drawings.

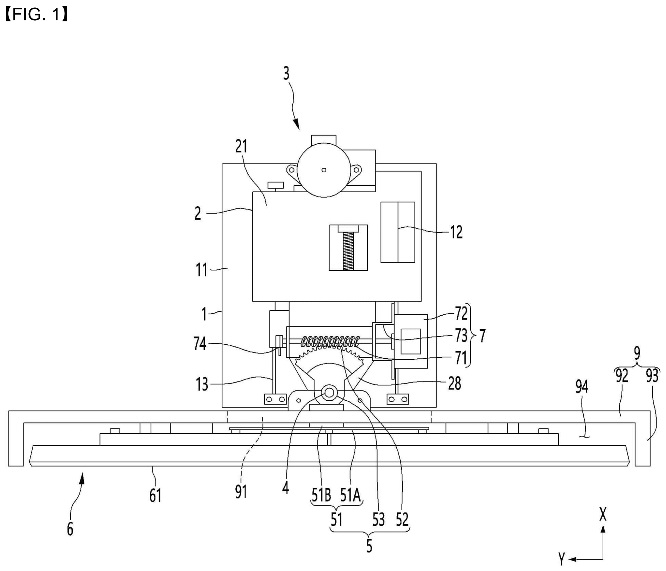

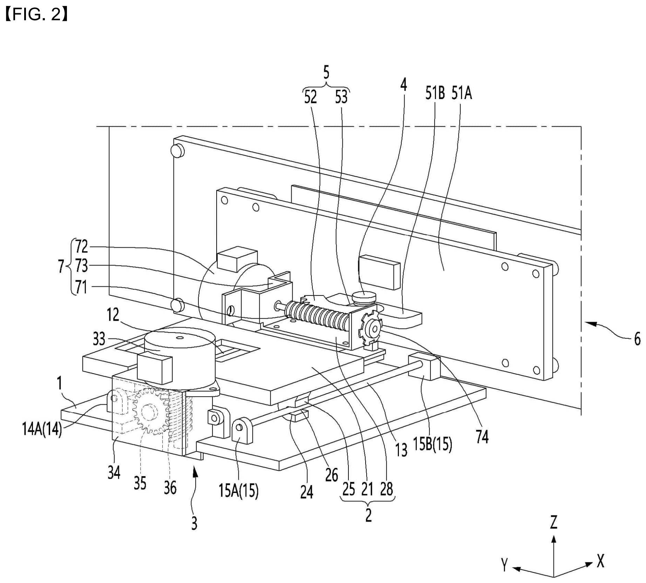

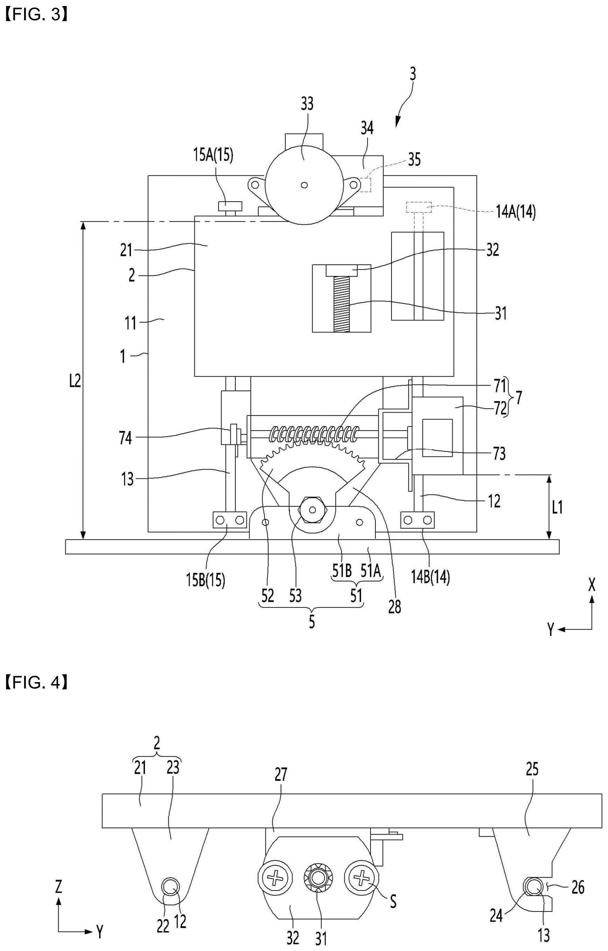

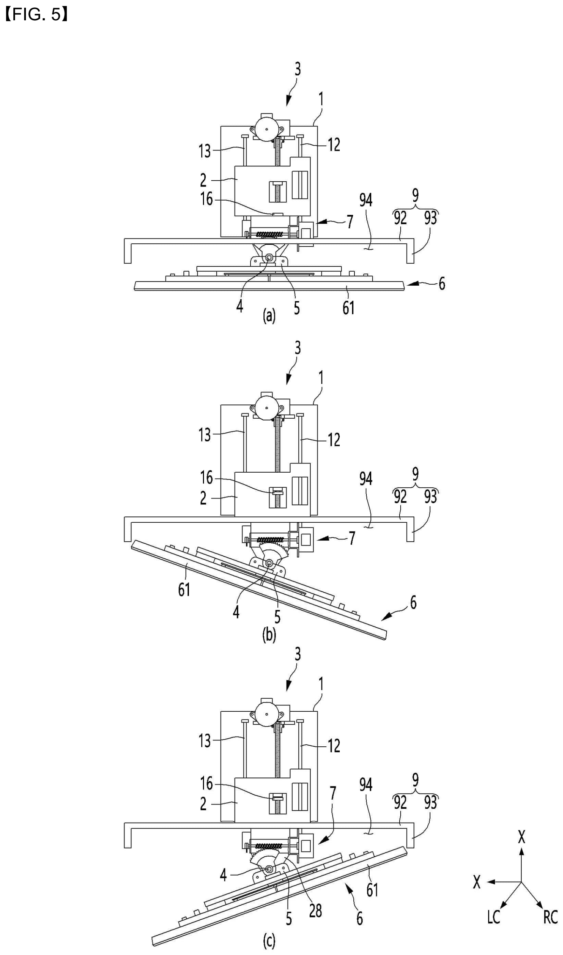

FIG. 1 is a plan view of a display device for vehicle according to the present embodiment; FIG. 2 is a perspective view of a display device for vehicle according to the present embodiment; FIG. 3 is a view of a display device for vehicle according to the present embodiment when the display module is separated; FIG. 4 is a view illustrating a sliding frame and a lead screw according to the present embodiment; and FIG. 5 is a view illustrating various modes of the display module illustrated in FIG. 1.

Fig. 5 (a) illustrates an example of a display module being moved toward a passenger, Fig. 5 (b) illustrates an example of a display module being moved toward a passenger and swinging to the left, and Fig. 5 (c) illustrates an example of a display module being moved toward a passenger and swinging to the right.

A display device for vehicle may comprise a fixed frame (1); a sliding frame (2) disposed to slide on the fixed frame (1); a sliding drive source (3) disposed on the fixed frame (1) to slide the sliding frame (2); a swivel frame (5) rotatably connected to the sliding frame (2) by a swivel hinge (4); a display module (6) disposed on the swivel frame; and a swivel drive source (7) disposed on the sliding frame (2) to swivel the swivel frame (5).

The display device for vehicle may be installed in a cockpit or instrument panel of vehicle and visually provide various information to passengers in the vehicle.

The display device for vehicle may be a center display positioned in the center of the cockpit or instrument panel, or a CID (Center Information Display) that provides information to passengers in the driver's seat or passenger seat.

The display device for vehicle may be a driver display positioned in front of the driver's seat.

The display device for vehicle may be a passenger display positioned in front of the passenger seat, or a PIP (Passenger Information Display) or CDD (Co-driver Display).

A display device for vehicle may be installed on the hood or backrest of a vehicle, and the installation location of the display device for vehicle is not limited.

Hereinafter, the display device for vehicle is described as a display installed in the cockpit or instrument panel of the vehicle. The direction in which a vehicle moves forward is described as forward, and the direction in which the vehicle moves rearward is described as rearward.

The fixed frame (1) may be disposed in the cockpit or instrument panel of vehicle. The fixed frame (1) may be disposed inside the cockpit or instrument panel of vehicle.

The fixed frame (1) may be mounted in the cockpit or instrument panel of vehicle and may be fixed in position.

The fixed frame (1) may comprise a lower plate (11) horizontally disposed.

The lower plate (11) may be plate-shaped.

The fixed frame (1) may be provided with a sliding main shaft (12) and a sliding sub shaft (13).

The sliding main shaft (12) and the sliding sub shaft (13) may be supported on the fixed frame (1) and connected to the sliding frame (2).

Each of the sliding main shaft (12) and the sliding sub shaft (13) may be disposed longitudinally in the front and rear direction (X) above the lower plate (11).

The sliding main shaft (12) and the sliding sub shaft (13) may be disposed parallel.

The sliding main shaft (12) may be positioned above the left side of the lower plate (11).

The sliding sub shaft (13) may be positioned above the right side of the lower plate (11).

The sliding main shaft (12) and the sliding sub shaft (13) may be spaced apart in a direction (Y) orthogonal to the slide direction (X) of the sliding frame (2). The sliding main shaft (12) and the sliding sub shaft (13) may be spaced apart in the left and right direction (Y).

The fixed frame (1) may comprise a sliding main shaft supporter (14) that supports the sliding main shaft (12).

The sliding main shaft supporter (14) may have a support hole formed therein through which the sliding main shaft (12) passes. The sliding main shaft supporter (14) may be formed to protrude from the upper surface of the lower plate (11).

The sliding main shaft (12) may slidably support the sliding frame (2) while being spaced apart from the lower plate (11).

A pair of sliding main shaft supports (14) may be formed on the upper surface of the lower plate (11), and the pair of sliding main shaft supports (14) may include a front sliding main shaft supporter (14A) and a rear sliding main shaft supporter (14B). The front sliding main shaft supporter (14A) and the rear sliding main shaft supporter (14B) may be spaced apart in the front and rear direction (X).

The fixed frame (1) may include a sliding sub shaft supporter (15) that supports the sliding sub shaft (13).

The sliding sub shaft supporter (15) may have a support hole formed therein through which the sliding sub shaft (13) passes. The sliding sub shaft supporter (15) may be formed to protrude from the upper surface of the lower plate (11).

The sliding sub shaft (13) may slidably support the sliding frame (2) while being spaced apart from the lower plate (11).

The sliding sub shaft supporter (15) may be spaced apart from the sliding main shaft supporter (14) in the left and right direction (Y).

A pair of sliding shaft supports (15) may be formed on the upper surface of the lower plate (11), and the pair of sliding shaft supports (15) may include a front sliding shaft supporter (15A) and a rear sliding shaft supporter (15B). The front sliding supporter (15) and the rear sliding supporter (15) may be spaced apart in the front and rear direction (X).

The sliding frame (2) may be slidably disposed above the fixed frame (1).

The sliding frame (2) may be spaced apart from the fixed frame (1) in the vertical direction (Z).

The sliding frame (2) may slide in the front and rear direction (X) above the fixed frame (1).

When the sliding frame (2) slides forward, it can move away from the passenger. Hereinafter, the sliding frame (2) moving away from the passenger may be defined as the forward movement of the sliding frame (2).

When the sliding frame (2) slides forward, it can move away from the passenger. Hereinafter, the sliding frame (2) moving closer to the passenger may be defined as the rearward movement of the sliding frame (2).

The sliding frame (2) may be moved forward to a forward position when the vehicle is stopped. The sliding frame (2) may be retracted to a retracted position when a passenger inputs a retract command via an input unit provided in the vehicle or while the vehicle is in motion.

The sliding frame (2) may be smaller than the fixed frame (1).

The sliding frame (2) may comprise an upper plate (21) spaced vertically apart from a lower plate (11)

The sliding frame (2) may comprise a first guide (23) having a sliding main shaft guide (22) through which a sliding main shaft (12) passes; and a second guide (25) having a sliding secondary shaft guide (24) through which a sliding sub shaft (13) passes.

The sliding sub shaft guide (24) may include an opening (26) extending to one end of the second guide (25).

The opening (26) may be opened in a direction (Y) orthogonal to the sliding direction (X) of the sliding frame (2). The opening (26) facilitates the insertion of the sliding sub shaft (13), thereby providing convenience in assembly.

The sliding sub shaft (13) may be moved horizontally (i.e., left and right) while supported by a sliding shaft guide (24) including the opening (26). The sliding shaft guide (24) can compensate for the axial distance error between the sliding main shaft (12) and the sliding sub shaft (13).

The sliding drive source (3) may comprise a lead screw (31); a nut (32) mounted on the sliding frame (2) and moved along the lead screw (31); and a sliding motor (33) for rotating the lead screw (31).

An example of the sliding drive source (3) is a sliding motor (33) connected to the rotation center of the lead screw (31) to rotate the lead screw (31).

Another example of the sliding drive source (3) may further comprise at least one power transmission member that transmits the driving force of the sliding motor (33) to the lead screw (31). The sliding motor (33) may rotate the lead screw (31) via a sliding gear box (34), and the sliding gear box (34) may comprise a driven gear (35) connected to the lead screw (31) to rotate the lead screw (31), and a driving gear (36) that meshes with the driven gear (35) to rotate the driven gear (35).

An example of the driven gear (35) may be a worm gear meshed with a worm wheel.

The driving gear (36) may be connected to the rotational shaft of the sliding motor (33) to rotate. An example of the driving gear (36) may comprise a worm wheel that is disposed elongated in the vertical direction (Z).

The lead screw (31) may be disposed longitudinally in the front and rear direction (X) on the upper side of the lower plate (11) of the fixed frame (1).

The lead screw (31) may be disposed between the sliding main shaft (12) and the sliding sub shaft (13), spaced apart from each of the sliding main shaft (12) and the sliding sub shaft (13) in the left and right direction (Y).

The nut (32) may have a gear formed on an inner surface of the nut that meshes with the lead screw (31), and may move in the longitudinal direction of the lead screw (31) when the lead screw (31) rotates.

The nut (32) may be fastened to a nut mounting portion (27) protruding from the bottom surface of the sliding frame (2) using a fastening member (S), such as a screw.

The sliding motor (33) may be mounted on the upper surface of the sliding gear box (34).

The display device for vehicle may include a lead screw supporter (16, show in FIG. 5) that is disposed on a fixed frame (1) and supports a lead screw (31).

The lead screw supporter (16) may protrude upward from the upper surface of the lower plate (11) of the fixed frame (1) and may rotatably support the rear end of the lead screw (31).

The sliding frame (2) may comprise a support portion (28) that supports the swivel hinge (4).

The support portion (28) may protrude rearward from the rear end of the upper plate (21). A portion of the support portion (28) may be positioned below the swivel frame (5) and may overlap the swivel frame (5) in the vertical direction (Z). The support portion (28) may be provided with a support hole that rotatably supports the swivel hinge (4).

The display module (6) may be a rear-view display module with an input unit (61) provided on the rear side and configured to display images in a rearward direction.

Examples of the input unit (61) include a touch screen or buttons that may be operated by a user.

The display module (6) may be moved so that the input unit (21) approaches the passenger, as illustrated in (a) of FIG. 5, swivel at a predetermined angle so that the input unit (21) faces the left tilt direction (LC), as illustrated in (b) of FIG. 5, or swivel at a predetermined angle so that the input unit (21) faces the right tilt direction (RC), as illustrated in (c) of FIG.

The display module (6) may be operated in a telescopic mode, as illustrated in (a) of FIG. 5, in which it moves toward the passenger, a left swing mode, as illustrated in (b) of FIG. 5, in which it moves toward the passenger and swings to the left, and a right swing mode, as illustrated in (c) of FIG. 5, in which it moves toward the passenger and swings to the right.

The display module (6) may be moved in any one of the telescopic mode, the left swing mode, and the right swing mode.

A vehicle or display device for vehicle may be equipped with a user input unit, such as a button or voice recognition module, that can input the mode of the display module (6). Passengers can input a telescopic mode, a left swing mode, or a right swing mode through the user input unit.

A processor disposed in the vehicle or display device for vehicle may drive/stop at least one of the sliding motor (33) of the sliding drive source (3) and the swivel motor (72) of the swivel drive source (7) based on a user input.

The telescopic mode may be a mode in which the display module (6) does not rotate left or right, but only moves forward and rearward (X) toward the vehicle interior.

When the telescopic mode is input, the display device for vehicle may drive/stop the sliding motor (33) of the sliding drive source (3) without driving the swivel motor (72) of the swivel drive source (7).

When the left swing mode or right swing mode is input, the display device for vehicle can drive/stop the sliding motor (33) of the sliding drive source (3) and drive/stop the swivel motor (72) of the swivel drive source (7).

The swivel hinge (4) may pass through the penetration portion (53) of the swivel frame (5) and the support portion (28) of the sliding frame (2), and may rotatably connect the swivel frame (5) to the sliding frame (2).

The swivel frame (5) may comprise a rear body (51) disposed on the display module (6); a swivel driven gear (52) formed on the rear body (51) and a penetration portion (53) through which the swivel hinge (4) passes.

The rear body (61) may be disposed on the front of the display module (6). The rear body (61) may comprise a vertical plate (61A) positioned vertically on the front of the display module (6) and a horizontal plate (61B) protruding horizontally from the front of the vertical plate (61A).

The swivel driven gear (52) may be formed integrally with the rear body (51) or manufactured separately and then fastened to the rear body (51) using a fastening member such as a screw.

The swivel driven gear (52) may rotate integrally with the rear body (51). An example of the swivel driven gear (52) may include a worm gear. For convenience, the swivel driven gear and the worm gear will be described below using the same reference numeral 52.

The penetration portion (53) may include a through-hole through which the swivel hinge (4) passes.

The swivel drive source (7) may rotate the swivel frame (5) left and right around the swivel hinge (4), and the display module (6) on which the swivel frame (5) is disposed may rotate left and right around the swivel hinge (4) together with the swivel frame (5).

The swivel drive source (7) may comprise a worm wheel (71) meshed with a worm gear; and a swivel motor (72) disposed on the sliding frame (2) to rotate the worm wheel (71).

The worm wheel (71) may be disposed lengthwise in the left and right direction (Y) relative to the sliding frame (2).

The worm wheel (71) may be spaced apart from the upper plate (21) in the vertical direction (Z).

The swivel motor (72) may be mounted to the sliding frame (2) by a motor mounter (73). The swivel motor (72) may be positioned next to the support portion (28).

The swivel motor (72) may be connected to one end of the worm wheel (71) and rotate the worm wheel (71).

The swivel motor (72) may comprise a rotation shaft connected to the worm wheel (71). The rotation shaft of the swivel motor (72) can rotate in both directions.

The display device for vehicle can further include a worm wheel supporter (74) positioned on the sliding frame (2) to support the worm wheel (71).

The worm wheel supporter (74) may support the other end of the worm wheel (71).

When the rotation shaft of the swivel motor (72) rotates in one direction, the worm wheel (71) can rotate the worm gear (52) in one direction around the swivel hinge (4), and the swivel frame (5) may swing in the left inclined direction (LC), as illustrated in (b) of FIG. 5.

When the rotation shaft of the swivel motor (72) rotates in the other direction, the worm wheel (71) may rotate the worm gear (52) in the other direction around the swivel hinge (4), and the swivel frame (5) may swing in the right inclined direction (RC), as illustrated in (c) of FIG. 5.

One of the swivel motor (72) of the swivel drive source (7) or the sliding motor (33) of the sliding drive source (3) may be closer to the display module (6) than the other.

The swivel motor (72) of the swivel drive source (7) may be closer to the display module (6) than the sliding motor (33) of the sliding drive source (3). The distance (L1) between the swivel motor (72) of the swivel drive source (7) and the display module (6) may be shorter than the distance (L2) between the sliding motor (33) of the sliding drive source (3) and the display module (6).

The swivel motor (72) may be closer to the rear end of the fixed frame (1), and the sliding motor (33) may be closer to the front end of the fixed frame (1), so that the load of the display device for vehicle may be distributed front to rear.

The display device for vehicle may further comprise a display frame (9).

The display frame (9) may form the rear exterior of the display device for vehicle.

A portion of the display frame (9) may be exposed to the vehicle interior.

The display frame (9) may have a through hole (91) through which the swivel frame (4) passes.

The display frame (9) may have an open rear surface.

The display frame (9) may include a front body (92) and a frame (93) protruding rearward from the front body (92). The display frame (9) may be fixed to cockpit or instrument panel of the vehicle. The display frame (9) may be formed integrally with the fixed frame (1) or may be connected to a fixed frame (1) manufactured separately from the fixed frame (1).

A space (94) may be formed within the display frame (9), and the display module (6) may be inserted into and accommodated in the space (94). When the display module (6) is swiveled, a portion of the display module (6) may be withdrawn outside the space (94), and the remaining portion of the display module (6) may be accommodated in the space (S).

Meanwhile, the display device for vehicle can determine the moving motion of the display module (6) based on the driving timing of the sliding motor (33) and the swivel motor (72).

The sliding motor (33) and the swivel motor (72) may have the same or different starting and stopping times.

In one example, the swivel motor (72) and the sliding motor (33) may be driven together, and the display module (6) may swing while advancing and retreating. In other words, the advancing and retreating motions of the display module (6) and swing motion the display module (6) may be performed simultaneously.

The swivel motor (72) and the sliding motor (33) may be driven together and stopped together.

In another example, the swivel motor (72) and the sliding motor (33) may be driven sequentially. In this case, the advancing and retreating motions of the display module (6) and the swinging motions of the display module (6) may be performed sequentially.

When the sliding motor (33) is first started and then stopped, the display module (6) may be moved forward and rearward, and the display module (6) may be moved rearward and closer to the passenger.

While the sliding motor (33) is operating, the swivel motor (72) may not be driven. In this case, the display module (6) may be moved rearward without tilting to the left or right.

After the sliding motor (33) is stopped, the swivel motor (72) may be started, and with the display module (6) retracted, the display module (6) may be swing while the swivel motor (72) is driven. The swivel motor (72) may be stopped after a set time has elapsed after being started.

In the other example, the swivel motor (72) may be driven together with the sliding motor (33) when the sliding motor (33) is driven, and may be driven further in an additional driving manner after the sliding motor (33) is stopped.

The swivel motor (72) may be started when the sliding motor (33) is started, or may be started during the driving of the sliding motor (33).

Thereafter, the swivel motor (72) may be stopped during the driving of the sliding motor (33).

The swivel motor (72) may be started again after the sliding motor (33) is stopped, and then stopped.

In this case, the display module (2) may be swiveled to a first angle while moving forward and rearward, and may be additionally swiveled from the first angle to a second angle after the sliding motor (33) is stopped.

Various examples may be applied to the driving or stopping timing of the swivel motor (72) and the sliding motor (33), and the display module (2) may be used as a display. Of course, all of them are applicable as long as they do not interfere with the frame (9).

The above description is merely an example of the technical idea of the present disclosure, and those skilled in the art will appreciate that various modifications and variations may be made without departing from the essential characteristics of the present disclosure.

Accordingly, the embodiments disclosed in the present disclosure are not intended to limit the technical idea of the present disclosure but to explain it, and the scope of the technical idea of the present disclosure is not limited by these embodiments.

The scope of protection of the present disclosure should be interpreted by the claims below, and all technical ideas within a scope equivalent thereto should be interpreted as being included in the scope of the rights of the present disclosure.

## Claims

1. A display device for vehicle comprising:
a fixed frame;
a sliding frame slidably disposed on the fixed frame;
a sliding drive source disposed on the fixed frame to slide the sliding frame;
a swivel frame rotatably connected to the sliding frame by a swivel hinge;
a display module disposed on the swivel frame; and
a swivel drive source disposed on the sliding frame to swivel the swivel frame.

2. The display device for vehicle of claim 1,
wherein the display module operates in one of the following modes:
a telescopic mode in which the display module moves toward a passenger;
a left swing mode in which the display module moves toward the passenger and swings in an inclined left direction; and
a right swing mode in which the display module moves toward the passenger and swings in an inclined right direction.

3. The display device for vehicle of claim 1,
wherein the sliding frame is disposed above the fixed frame to slide forward and rearward, and a size of the sliding frame is smaller than a size of the fixed frame.

4. The display device for vehicle of claim 1, comprising:
a sliding main shaft and a sliding sub shaft supported by the fixed frame and connected to the sliding frame,
wherein the sliding main shaft and the sliding sub shaft are spaced apart in a direction orthogonal to a sliding direction of the sliding frame.

5. The display device for vehicle of claim 4,
wherein the sliding frame is formed with
a first guide having a sliding main shaft guide formed in the first guide through which the sliding main shaft passes;
a second guide having a sliding sub shaft guide formed in the second guide through which the sliding sub shaft passes; and
wherein the sliding sub shaft guide includes an opening extending to one end of the second guide.

6. The display device for vehicle of claim 5,
wherein the opening is opened in a direction orthogonal to the sliding direction of the sliding frame.

7. The display device for vehicle of claim 1,
wherein the sliding drive source comprises:
a lead screw;
a nut mounted on the sliding frame and moving along the lead screw; and
a sliding motor rotating the lead screw.

8. The display device for a vehicle of claim 7,
wherein the sliding drive source further comprises a sliding gear box, wherein the sliding gear box comprises:
a driven gear connected to the lead screw; and
a driving gear connected to the sliding motor and rotating the driven gear.

9. The display device for a vehicle of claim 8,
wherein the sliding motor is disposed above the sliding gear box.

10. The display device of claim 7, comprising;
a lead screw supporter disposed on the fixed frame to support the lead screw.

11. The display device of claim 1,
wherein the swivel frame comprises:
a rear body disposed on the display module;
a swivel driven gear formed on the rear body; and
a penetration portion through which the swivel hinge passes.

12. The display device for vehicle of claim 11,
wherein the sliding frame includes a support portion having a support hole formed in the support portion for rotatably supporting the swivel hinge.

13. The display device for vehicle of claim 11,
wherein the swivel driven gear includes a worm gear,
wherein the swivel drive source comprises
a worm wheel meshed with the wor gear; and
a swivel motor disposed on the sliding frame to rotate the worm wheel.

14. The display device for vehicle of claim 13, further comprising
a worm wheel supporter disposed on the sliding frame to support the worm wheel.

15. The display device for vehicle of claim 1,
wherein a distance between the swivel motor of the swivel drive source and the display module is shorter than a distance between the sliding motor of the sliding drive source and the display module.

16. The display device for vehicle of claim 1,
wherein the swivel motor of the swivel drive source is driven together with the sliding motor of the sliding drive source,
the swivel motor is stopped while the sliding motor is driven, and the swivel motor is driven after the sliding motor is stopped.
